# EUROPEAN PATENT APPLICATION

(11) **EP 4 439 732 A1**
(43) Date of publication of application: **02.10.2024**
(21) Application number: 22898295.5
(22) Date of filing: 25.10.2022
(51) Int. Cl.: H01M 4/62

(54) **ORGANIC ANTI-SHRINKAGE AGENT FOR LEAD-ACID BATTERIES**

(30) Priority: 26.11.2021 JP 2021191702
(71) Applicant: Nippon Paper Industries Co., Ltd., Tokyo 114-0002 (JP)
(72) Inventor: SHINDO Hiroki, Tokyo 114-0002 (JP); NISHIMORI Yoshito, Tokyo 114-0002 (JP); AIMI Hikaru, Tokyo 114-0002 (JP); KAWAMURA Masanobu, Tokyo 114-0002 (JP)
(74) Representative: Kuhnen & Wacker Patent- und Rechtsanwaltsbüro PartG mbB
(86) International application number: PCT/JP2022/039606
(87) International publication number: WO 2023/095511

(57) **Abstract**

An organic expander for a lead storage battery contains sulfomethylated kraft lignin, wherein an organic S content contained in the sulfomethylated kraft lignin is more than 3.8 mass% and 5.1 mass% or less.

## Description

### Technical Field

The present invention relates to an organic expander for a lead storage battery.

### Background Art

A lead storage battery is relatively inexpensive and has stable performance as a secondary battery, and therefore, has been widely used as a battery for an automobile, a battery for a portable device, a backup battery for a computer, a battery for communication, or the like.

When the lead storage battery changes from a discharged state to a charged state during repeated charging and discharging, a negative electrode active material shrinks and a specific surface area decreases, and the discharge performance is deteriorated. In addition, in the negative electrode active material, metallic lead emits electrons and changes to lead sulfate in a discharge reaction, and the lead sulfate obtains the electrons and changes to metallic lead in a charge reaction. When the lead sulfate becomes coarsened, the lead sulfate is hardly dissolved in the charge reaction, and the charging performance is deteriorated.

It has been proposed to add lignin extracted from wood as an organic expander to be added to a negative electrode active material in order to prevent shrinkage of the negative electrode active material of a lead storage battery (Patent Literature 1).

In addition, as the lignin for a lead storage battery, some kinds of lignin have been disclosed (Patent Literatures 2 and 3).

### Citation List

### Patent Literature

Patent Literature 1: JP 62-145655 A
Patent Literature 2: JP 2006-196191 A
Patent Literature 3: JP 2007-165273 A

### Summary of Invention

### Technical Problem

Various performances are required in a lead storage battery, but in general, in a case where lignin is added to a negative electrode of the lead storage battery, although an effect of improving low temperature discharge performance or suppressing sulfation is obtained, there is a problem that the charge acceptance is lowered by the nature.

An object of the present invention is to provide an organic expander that further improves life, capacity, and discharge characteristics while suppressing a decrease in charge acceptance of the lead storage battery as much as possible.

### Solution to Problem

[1] An organic expander for a lead storage battery containing sulfomethylated kraft lignin, in which an organic S content contained in the sulfomethylated kraft lignin is more than 3.8 mass% and 5.1 mass% or less.
[2] The organic expander for a lead storage battery according to [1], in which the organic expander has a weight average molecular weight of 18,000 or less.
[3] A method for producing the organic expander for a lead storage battery according to [1], the method including the step of sulfomethylating kraft lignin.
[4] A method for producing the organic expander for a lead storage battery according to [2], the method including the step of sulfomethylating kraft lignin.

### Advantageous Effects of Invention

According to the present invention, it is possible to provide an organic expander that further improves life, capacity, and discharge characteristics while suppressing a decrease in charge acceptance of the lead storage battery as much as possible.

### Description of Embodiments

Hereinafter, the present invention will be described in detail according to preferred embodiments. However, the present invention is not limited at all to the following embodiments. In addition, in the present invention, "to" includes an end value. That is, "X to Y" includes values X and Y at both ends.

An organic expander for a lead storage battery of the present invention contains sulfomethylated kraft lignin, in which an organic S content contained in the sulfomethylated kraft lignin is more than 3.8 mass% and 5.1 mass% or less.

As the lignin used in the organic expander of the present invention, sulfomethylated kraft lignin obtained by introducing a sulfonic acid group into kraft lignin by sulfomethylation is used.

### (Kraft Lignin)

Kraft lignin is also called thiolignin or sulphate lignin. As the kraft lignin, a prepared kraft lignin may be used, or a commercially available product may be used. Examples of a method for preparing kraft lignin include a method for obtaining an alkali solution of kraft lignin or powdered kraft lignin by spray-drying and pulverizing an alkali solution of kraft lignin, and a method for obtaining acid-precipitated kraft lignin by precipitating an alkali solution of kraft lignin with an acid.

The alkali solution of kraft lignin can be obtained by, for example, a known method as described in JP 2000-336589 A, but is not limited to the method.

As a raw material wood, for example, hardwood, softwood, miscellaneous trees, bamboo, kenaf, bagasse, and empty bunches after palm oil extraction can be used.

As the acid-precipitated kraft lignin obtained by precipitating an alkali solution of kraft lignin with an acid, powdery acid-precipitated kraft lignin obtained by a method described in WO 2006/038863, WO 2006/031175, or WO 2012/005677 can be used, but the acid-precipitated kraft lignin is not limited to these methods.

### (Sulfomethylated Kraft Lignin)

The sulfomethylated kraft lignin used in the present invention has an organic S content of more than 3.8 mass% and 5.1 mass% or less and more preferably more than 3.8 mass% and 4.8 mass% or less. When the organic S content is excessively larger than the above upper limit value, charge acceptance may be significantly deteriorated, and when the organic S content is excessively smaller than the above lower limit value, capacity, discharge characteristics, and life may be deteriorated.

The organic S content contained in the sulfomethylated kraft lignin in the present invention refers to a total amount of sulfur atoms contained in a sulfonic acid (salt) group represented by -SO₃M (where M represents a hydrogen atom, a monovalent metal salt, or a divalent metal salt) with respect to a solid amount of lignin and sulfur atoms contained in a kraft lignin skeleton with respect to a solid amount of lignin. More specifically, it is a value calculated from the following Equation (1). Organic S content (mass%) of sulfomethylated kraft lignin = Total S content (mass%) - Inorganic S content (mass%) (In Equation (1), the S content represents an S content with respect to the solid amount of lignin.)

In Equation (1), the total S content is a total S content contained in a lignin derivative product, and can be quantified by ICP emission spectrometry. In addition, the inorganic S content can be calculated as the total amount of the SO₃ content, the S₂O₃ content, and the SO₄ content quantified by ion chromatography. However, the inorganic S content is not calculated based on the content of the oxide itself, but is calculated based on the content of S in the oxide.

In a sulfomethylation reaction of kraft lignin, a sulfonic acid (salt) group is generally introduced into a C₆-C₃ unit of lignin at a position represented by the following General Formula (1). General Formula (1) represents a C₆-C₃ unit which is a partial structure of lignin. That is, in the reaction indicated by the left arrow, a sulfonic acid (salt) group is introduced at the α-position, and the reaction is generally called sulfonation. On the other hand, in the reaction indicated by the right arrow, a sulfonic acid (salt) group is introduced into the 5-position of the aromatic nucleus via formaldehyde in addition to the α-position. 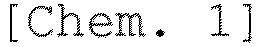 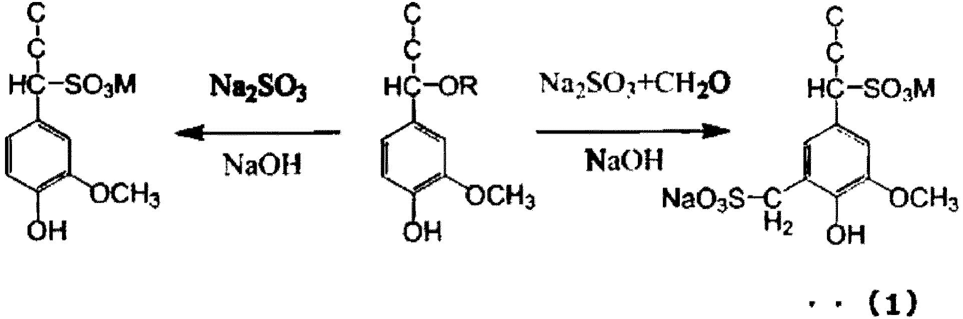 (In General Formula (1), M represents a hydrogen atom, a monovalent metal salt, or a divalent metal salt)

The sulfomethylated kraft lignin may be produced by a known method, and can be produced, for example, by reacting kraft lignin with a sulfite and an aldehyde.

An example of a method for sulfomethylating lignin is disclosed in US 2,680,113. In this method, the sulfomethylation reaction of lignin is performed in a temperature range of 50 to 200°C, and preferably in a temperature range of 90 to 170°C. In addition, pH during the sulfomethylation reaction is preferably 8 or more.

The amount of sulfite added is preferably more than 16.0 mass% and 25.0 mass% or less, and more preferably more than 16.0 mass% and 23.0 mass% or less, with respect to the lignin solid amount. When the amount of sulfite added is less than the above range, the sulfone group is not sufficiently introduced into lignin, and the capacity, discharge characteristics, and life may be deteriorated. On the other hand, when a sulfite is excessively added, the sulfite remains as an unreacted substance, and the lignin purity decreases, such that charge acceptance, capacity, and discharge characteristics may be deteriorated.

As the aldehyde, formaldehyde is preferable. The amount of aldehyde added is preferably more than 4.0 mass% and 6.6 mass% or less, and more preferably more than 4.0 mass% and 6.1 mass% or less, with respect to the lignin solid content. When the formaldehyde is not within the above range, the sulfone group is not sufficiently introduced into lignin, and the capacity, discharge characteristics, and life may be deteriorated.

A weight average molecular weight of the sulfomethylated kraft lignin used in the present invention is preferably 10,000 or more and 18,000 or less. The weight average molecular weight is larger than the above upper limit, charge acceptance may be deteriorated.

In the present invention, the weight average molecular weight is measured by gel permeation chromatography (GPC). Measurement of GPC may be performed by a known method for pullulan conversion under the following conditions.
Measuring device: manufactured by Tosoh Corporation
Used column: Shodex Column OH-pak SB-806HQ, SB-804HQ, SB-802.5HQ
Eluent: aqueous solution of 1.0% of Na tetraborate and 0.3% of isopropyl alcohol
Eluent flow rate: 1.00 mL/min
Column temperature: 50°C
Measurement sample concentration: 0.2 mass%
Standard substance: pullulan (manufactured by Showa Denko K.K.)
Detector: RI detector (manufactured by Tosoh Corporation)
Calibration curve: pullulan standard

The organic expander of the present invention is mainly added to a negative electrode plate of a lead storage battery. An addition rate of the solid content of the organic expander is usually 0.02 to 1.0 mass% with respect to the lead powder.

The lead storage battery using the organic expander for a lead storage battery of the present invention can be used for a battery for an automobile, a battery for a portable device, a backup battery for a computer, a battery for communication, and the like.

### Examples

Hereinafter, the present invention will be described more specifically with reference to Examples, but the present invention is not limited to the following Examples, and can be implemented with appropriate modifications within a range that can be adapted to the gist described above and below, and all of them are included in the technical scope of the present invention. Note that, in the examples, unless otherwise specified,% represents mass%, and parts represents parts by weight.

A charge reaction (Formula (1)) and a discharge reaction (Formula (2)) in a negative electrode of a lead storage battery are shown below.
[Chem. 2]

▪ FORMULA (1) PbSO₄ → Pb²⁺ + SO₄²⁻ Pb²⁺ + 2e⁻ → Pb

▪ FORMULA (2): Pb → Pb²⁺ + 2e⁻ Pb²⁺ + SO₄²⁻ → PbSO₄

### <Cyclic Voltammetry Method>

Examples in the present invention were performed by a cyclic voltammetry (CV) method using a three-electrode system of a working electrode, a counter electrode, and a reference electrode. In the CV method, a CV curve (horizontal axis: potential, vertical axis: current) is obtained by reciprocating the potential of the working electrode in a certain range and observing the current at that time. When the potential of the electrode is positively scanned, electrons move from a reductant near the electrode, and an oxidation current flows. When electron transfer proceeds and most of it becomes oxidant, the oxidation current decreases and an upwardly convex peak is formed in the CV curve. When the potential is negatively scanned, electrons move from the electrode to the oxidant, and a reduction current flows. Eventually, the reduction current decreases, and a downward convex peak is formed. By repeating the potential scanning, the oxidation reaction and the reduction reaction can be repeated. On a surface of the lead working electrode, when a reduction current flows, a charge reaction shown in Formula (1) occurs, and when an oxidation current flows, a discharge reaction shown in Formula (2) occurs. An area of the oxidation current in the CV curve corresponds to a discharge amount in the negative electrode, and an area of the reduction current corresponds to a charge amount in the negative electrode.

### <Experimental Conditions for Cyclic Voltammetry>

Cell: plate electrode evaluation cell VM-2S (manufactured by EC FRONTIER CO., LTD.)
Working electrode: lead plate (manufactured by Standard Test Piece Co., Ltd., plate thickness: 0.5 mm, radius: 2.5 mm, purity: 99.99%)
Counter electrode: lead plate (manufactured by Standard Test Piece Co., Ltd., plate thickness: 0.5 mm, purity: 99.99)
Reference electrode: Ag/AgCl reference electrode (manufactured by EC FRONTIER CO., LTD.)
Electrolytic solution: 37% diluted sulfuric acid (specific gravity: 1.270 (25°C)) obtained by dissolving an organic expander (Examples and Comparative Examples) in an amount of 20 ppm
Pretreatment: -700 mV, 30 min
Potential width: -700 mV , 0 mV → -1,000 mV , -700 mV (1 cycle)
Sweep rate: 50 mV/min
Temperature: 25°C, 0°C
Number of cycles: 14,000 times and 2,100 times

### <Separation of Kraft Lignin>

Kraft lignin was separated by a known method. That is, carbon dioxide was passed through the softwood (N material) kraft cooking black liquor to lower the pH of the black liquor to 10, and primary filtration was performed. Redispersion was performed in water again, the pH was lowered to 2 with sulfuric acid, and secondary filtration was performed. Washing with water was performed, and then drying was performed to obtain softwood kraft lignin.

### <Production Example 1>

A glass reaction vessel equipped with a thermometer, a stirrer, and a reflux device was charged with 500 parts of a solution obtained by dissolving softwood kraft lignin with NaOH at pH 10 so as to have a solid content of 17%, 17.0 parts of sodium sulfite, and 12.0 parts of a 37% formaldehyde solution, and the mixture was reacted at 96°C for 24 hours under stirring. After cooling to room temperature, softwood sulfomethylated kraft lignin (A-1) was obtained.

### <Production Example 2>

A glass reaction vessel equipped with a thermometer, a stirrer, and a reflux device was charged with 500 parts of a solution obtained by dissolving softwood kraft lignin with NaOH at pH 10 so as to have a solid content of 12%, 12.0 parts of sodium sulfite, and 8.5 parts of a 37% formaldehyde solution, and the mixture was reacted at 90°C for 10 hours under stirring. After cooling to room temperature, softwood sulfomethylated kraft lignin (A-2) was obtained.

### <Production Example 3>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 17.0 parts of sodium sulfite, and 12.0 parts of a 37% formaldehyde solution, and the mixture was reacted at 170°C for 120 minutes under stirring. After cooling to room temperature, softwood sulfomethylated kraft lignin (A-3) was obtained.

### <Production Example 4>

A glass reaction vessel equipped with a thermometer, a stirrer, and a reflux device was charged with 500 parts of a solution obtained by dissolving softwood kraft lignin with NaOH at pH 10 so as to have a solid content of 17%, 19.6 parts of sodium sulfite, and 13.9 parts of a 37% formaldehyde solution, and the mixture was reacted at 98°C for 24 hours under stirring. After cooling to room temperature, softwood sulfomethylated kraft lignin (A-4) was obtained.

### <Production Example 5>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 14.5 parts of sodium sulfite, and 10.2 parts of a 37% formaldehyde solution, and the mixture was reacted at 120°C for 120 minutes under stirring. After cooling to room temperature, softwood sulfomethylated kraft lignin (A-5) was obtained.

### <Production Example 6>

A glass reaction vessel equipped with a thermometer, a stirrer, and a reflux device was charged with 500 parts of a solution obtained by dissolving softwood kraft lignin with NaOH at pH 10 so as to have a solid content of 17%, 15.3 parts of sodium sulfite, and 10.8 parts of a 37% formaldehyde solution, and the mixture was reacted at 92°C for 18 hours under stirring. After cooling to room temperature, softwood sulfomethylated kraft lignin (A-6) was obtained.

### <Production Example 7>

A 1 L autoclave equipped with a thermometer, a stirrer, and a reflux condenser was charged with 500 parts of a solution obtained by dissolving softwood kraft lignin with NaOH at pH 10 so as to have a solid content of 12%, 10.2 parts of sodium sulfite, and 7.2 parts of a 37% formaldehyde solution, and the mixture was reacted at 130°C for 180 minutes under stirring. After cooling to room temperature, softwood sulfomethylated kraft lignin (A-7) was obtained.

### <Production Example 8>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 17.0 parts of sodium sulfite, and 14.5 parts of a 37% formaldehyde solution, and the mixture was reacted at 150°C for 120 minutes under stirring. After cooling to room temperature, softwood sulfomethylated kraft lignin (A-8) was obtained.

### <Comparative Example 1>

VANILLEX N (hereinafter, referred to as B-1, manufactured by NIPPON PAPER INDUSTRIES CO., LTD., concentration: 95%, main component: partially desulfonated sulfite lignin) was used.

### <Comparative Example 2>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 12.8 parts of sodium sulfite, and 9.0 parts of a 37% formaldehyde solution, and the mixture was reacted at 140°C for 120 minutes under stirring. After cooling to room temperature, softwood sulfomethylated kraft lignin (B-2) was obtained.

### <Comparative Example 3>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 8.5 parts of sodium sulfite, and 6.0 parts of a 37% formaldehyde solution, and the mixture was reacted at 130°C for 120 minutes under stirring. After cooling to room temperature, softwood sulfomethylated kraft lignin (B-3) was obtained.

### <Comparative Example 4>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 4.3 parts of sodium sulfite, and 3.0 parts of a 37% formaldehyde solution, and the mixture was reacted at 160°C for 120 minutes under stirring. After cooling to room temperature, softwood sulfomethylated kraft lignin (B-4) was obtained.

### <Comparative Example 5>

A 1 L autoclave equipped with a thermometer, a stirrer, and a reflux condenser was charged with 500 parts of a solution obtained by dissolving softwood kraft lignin with NaOH at pH 10 so as to have a solid content of 17%, 2.1 parts of sodium sulfite, and 1.5 parts of a 37% formaldehyde solution, and the mixture was reacted at 150°C for 120 minutes under stirring. After cooling to room temperature, softwood sulfomethylated kraft lignin (B-5) was obtained.

### <Comparative Example 6>

According to the method described in Examples of WO 2012/005677, precipitated kraft lignin was obtained from a hardwood kraft cooking black liquor instead of the softwood kraft cooking black liquor. The obtained precipitated kraft lignin was dissolved in 48% NaOH to obtain a kraft lignin solution having pH 10 and a solid content concentration of 20%.

A stainless steel reaction vessel equipped with a thermometer, a stirrer, and a reflux device was charged with 100 parts of the obtained kraft lignin solution, 400 parts of water, 7.0 parts of a 37% formaldehyde solution (manufactured by Wako Pure Chemical Industries, Ltd.), and 10 parts of sodium sulfite (manufactured by Wako Pure Chemical Industries, Ltd.), and the temperature was raised to 140°C under stirring. After the temperature was raised, the mixture was reacted for 2 hours while being maintained at 140°C. Thereafter, the mixture was cooled to obtain a sulfomethylated kraft lignin solution having pH 10 and a solid content concentration of 20%, and then spray-dried to obtain powdered lignin (B-6).

### <Comparative Example 7>

A glass reaction vessel equipped with a thermometer, a stirrer, and a reflux condenser was charged with 500 parts of a solution obtained by dissolving softwood kraft lignin with NaOH at pH 10 so as to have a solid content of 17%, 25.5 parts of sodium sulfite, and 18.1 parts of a 37% formaldehyde solution, and the mixture was reacted at 93°C for 24 hours under stirring. After cooling to room temperature, softwood sulfomethylated kraft lignin (B-7) was obtained.

The composition of the sulfomethylated kraft lignin obtained in each of Production Examples 1 to 8, the partially desulfonated sulfite lignin of Comparative Example 1, and the sulfomethylated kraft lignin of each of Comparative Examples 2 to 7 are shown in Table 1.

**[Table 1]**

| Production example | | Organic S content (%) | Weight average molecular weight (RI) |
|---|---|---|---|
| Production Example 1 | A-1 | 4.6 | 16,000 |
| Production Example 2 | A-2 | 4.6 | 12,400 |
| Production Example 3 | A-3 | 4.6 | 15,600 |
| Production Example 4 | A-4 | 5.0 | 17,700 |
| Production Example 5 | A-5 | 3.9 | 14,000 |
| Production Example 6 | A-6 | 4.3 | 15,100 |
| Production Example 7 | A-7 | 3.9 | 10,300 |
| Production Example 8 | A-8 | 4.6 | 22,500 |
| Comparative Example 1 | B-1 | 2.7 | 12,100 |
| Comparative Example 2 | B-2 | 3.7 | 15,200 |
| Comparative Example 3 | B-3 | 2.9 | 13,800 |
| Comparative Example 4 | B-4 | 2.2 | 11,200 |
| Comparative Example 5 | B-5 | 1.6 | 10,200 |
| Comparative Example 6 | B-6 | 1.4 | 8,200 |
| Comparative Example 7 | B-7 | 6.0 | 20,800 |

In Table 1,% represents mass% with respect to the solid content of the composition obtained in each Production Example.

### <CV Experimental Method 1>

CV of 14,000 cycles was performed at 25°C, and the number of cycles at which the charge and discharge amount reached the maximum value was determined and used as an index of life characteristics. The discharge amount in the cycle in which the charge and discharge amount reached the maximum value was obtained as the maximum discharge amount, and used as an index of capacity and discharge characteristics. Further, a value obtained by dividing the maximum value of the charge current of the CV curve at the 2,000th cycle by the charge amount was defined as the charge acceptance.

### <CV Experimental Method 2>

CV of 2,000 cycles was performed at 25°C. Subsequently, a value obtained by dividing the discharge amount measured when the cell was allowed to stand at 0°C for 6 hours to set the electrolytic solution temperature to 0°C and then 2,100th cycle of CV was performed by the discharge amount measured when the cell was allowed to stand at 25°C for 6 hours and then the 2,100th cycle of CV was performed was defined as low temperature discharge performance.

The cyclic voltammetry experiment results of the sulfomethylated kraft lignin obtained in each of Production Examples 1 to 8, and the sulfomethylated kraft lignin and the partially desulfonated sulfite lignin obtained in each of Comparative Examples 1 to 7 are shown in Table 2 as Examples 1 to 8 and Comparative Examples 1 to 7.

**[Table 2]**

| | | | Equivalent actual battery performance | | | |
|---|---|---|---|---|---|---|
| | | | Life | Capacity and discharge characteristics | Charge acceptance | Capacity and discharge characteristics (at low temperature) |
| | Production Example | | Evaluation items for electrochemical experiments | | | |
| | | | Number of cycles at which charge and discharge amount is maximized | Maximum discharge amount (C/m²) | Charge acceptance (%) | Low temperature discharge performance (%) |
| Example 1 | Production Example 1 | A-1 | 9,600 | 8,000 | 96 | 105 |
| Example 2 | Production Example 2 | A-2 | 9,500 | 8,200 | 99 | 107 |
| Example 3 | Production Example 3 | A-3 | 9,800 | 7,900 | 97 | 105 |
| Example 4 | Production Example 4 | A-4 | 10,700 | 8,500 | 96 | 103 |
| Example 5 | Production Example 5 | A-5 | 8,900 | 7,900 | 99 | 105 |
| Example 6 | Production Example 6 | A-6 | 9,000 | 8,200 | 98 | 105 |
| Example 7 | Production Example 7 | A-7 | 8,700 | 7,900 | 100 | 105 |
| Example 8 | Production Example 8 | A-8 | 9,900 | 8,100 | 95 | 107 |
| Comparative Example 1 | Comparative Example 1 | B-1 | 4,500 | 6,300 | 100 | 100 |
| Comparative Example 2 | Comparative Example 2 | B-2 | 4,500 | 5,800 | 108 | 102 |
| Comparative Example 3 | Comparative Example 3 | B-3 | 4,300 | 5,800 | 111 | 100 |
| Comparative Example 4 | Comparative Example 4 | B-4 | 4,100 | 5,900 | 111 | 100 |
| Comparative Example 5 | Comparative Example 5 | B-5 | 3,800 | 5,800 | 116 | 99 |
| Comparative Example 6 | Comparative Example 6 | B-6 | 2,400 | 4,600 | 110 | 65 |
| Comparative Example 7 | Comparative Example 7 | B-7 | 12,100 | 9,100 | 71 | 107 |

In Table 2, % represents a performance difference when the performance of Comparative Example 1 (B-1) is 100%.

As shown in Table 2, in Examples 1 to 8 (A-1 to A-8) included in the range of the organic expander for a lead storage battery of the present invention, the number of cycles at which the charge and discharge amount was maximized and the maximum discharge amount were improved as compared with the organic expander for a lead storage battery of each of Comparative Examples 1 to 6 (B-1 to B-6), and the low temperature discharge performance was improved by 3 to 7% as compared with the organic expander for a lead storage battery of Comparative Example 1 (B-1). In addition, the charge acceptance of each of Examples 1 to 8 (A-1 to A-8) included in the range of the organic expander for a lead storage battery of the present invention was slightly lower than that of the organic expander for a lead storage battery of Comparative Example 1 (B-1) in some cases, but was within 5%, and was improved as compared with the organic expander for a lead storage battery of Comparative Example 7 (B-7).

## Claims

1. An organic expander for a lead storage battery, comprising sulfomethylated kraft lignin,
wherein an organic S content contained in the sulfomethylated kraft lignin is more than 3.8 mass% and 5.1 mass% or less.

2. The organic expander for a lead storage battery according to claim 1, wherein the organic expander has a weight average molecular weight of 18,000 or less.

3. A method for producing the organic expander for a lead storage battery according to claim 1, the method comprising the step of sulfomethylating kraft lignin.

4. A method for producing the organic expander for a lead storage battery according to claim 2, the method comprising the step of sulfomethylating kraft lignin.
